# EUROPÄISCHE PATENTSCHRIFT

(11) **EP 4 256 939 B1**
(45) Veröffentlichungstag und Bekanntmachung des Hinweises auf die Patenterteilung: **23.10.2024**
(21) Anmeldenummer: 22166806.4
(22) Anmeldetag: 05.04.2022
(51) Int. Cl.: A01D 41/127, G01L 1/00

(54) **ERNTEMASCHINE ZUM VERARBEITEN VON ERNTEGUT UND VERFAHREN ZUR ERMITTLUNG VON EIGENSCHAFTEN VON ERNTEGUT**
CROP HARVESTING MACHINE AND METHOD FOR DETERMINING THE CHARACTERISTICS OF HARVESTED MATERIAL
ENGIN D'ABATTAGE-FAÇONNAGE PERMETTANT DE TRAITER LES PRODUITS DE LA RÉCOLTE ET PROCÉDÉS DE DÉTERMINATION DES PROPRIÉTÉS DES PRODUITS DE LA RÉCOLTE

(43) Veröffentlichungstag der Anmeldung: 11.10.2023
(73) Patentinhaber: SMF - Holding GmbH, 57612 Eichelhardt (DE)
(72) Erfinder: GÜRKE, Steffen, 51570 Windeck-Halscheid (DE)
(74) Vertreter: Neumann Müller Oberwalleney Patentanwälte PartG mbB

(56) Entgegenhaltungen:
- US-A1- 2021 029 877
- US-A1- 2021 144 917
- US-B1- 6 951 514

## Beschreibung

Die Anmeldung betrifft eine Erntemaschine zum Verarbeitung von Erntegut, aufweisend eine Sensoranordnung, ein Verfahren zur Ermittlung von Eigenschaften von Erntegut beim Verarbeiten des Ernteguts mit einer Erntemaschine sowie ein Verfahren zur Ermittlung von Eigenschaften von Erntegut auf einem Feld.

Bei heutigen Erntemaschinen gewinnt die Analyse der Betriebszustände einzelner Komponenten der Erntemaschinen an Bedeutung. Die WO 2019/008071 A1 offenbart ein Verfahren zur Analyse des Betriebszustandes eines Schneidwerks zum Mähen von Erntegut, wobei das Schneidwerk zumindest ein in einer Hubrichtung H hin und her angetriebenes Mähmesser aufweist und das Mähmesser Schneiden aufweist, die mit Gegenschneiden des Schneidwerks zusammenwirken, mit den folgenden Verfahrensschritten: Erfassen eines die Hubposition des Mähmessers repräsentierenden Signals, Erfassen eines die Messerkraft zum Antreiben des Mähmessers repräsentierenden Signals in Abhängigkeit der Hubposition und Bestimmung von Erntegut- und/oder Schnittsystemeigenschaften anhand einer Auswertung des die Messerkraft repräsentierenden Signals in Abhängigkeit der Hubposition.

Dabei wird die Annahme getroffen, dass Veränderungen der Messerkraft im Wesentlichen durch Schwankungen im Erntegutdurchsatz verursacht werden. Weitere Einflussgrößen auf die Antriebskraft von Komponenten, wie eine Strohzähigkeit und ein Reibwert von Nichtkornbestandteilen werden als konstant angesehen. Schwankt die reale Reibeigenschaft und Zähigkeit des Bestandes, beispielsweise durch unterschiedliche Abreife oder durch Unkrautwuchs, wirkt sich das als Messfehler auf den ermittelten Erntegutdurchsatz aus. Somit unterliegt eine Durchsatzmessung auf Grundlage der Antriebskraft von Erntegut verarbeitenden Komponenten einer Messunsicherheit.

Weitere Erntemaschinen sind aus US 6 951 514 B1 und US 2021/029877 A1 bekannt.

Eine Aufgabe kann darin bestehen, eine Erntemaschine zum Verarbeiten von Erntegut und ein Verfahren zur Ermittlung von Eigenschaften von Erntegut zur Verfügung zu stellen, die eine genauere Ermittlung der Eigenschaften des Ernteguts ermöglichen.

Die Aufgabe wird durch eine Erntemaschine zum Schneiden und Verarbeitung von Erntegut gemäß Anspruch 1 und durch zwei Verfahren zur Ermittlung von Eigenschaften von Erntegut nach den Ansprüchen 4 und 5 gelöst. In den Unteransprüchen sind mögliche Ausführungsformen angegeben.

Die Erntemaschine zum Verarbeiten von Erntegut weist eine Sensoranordnung mit mindestens zwei der folgenden Sensoren zum Erzeugen von Signalen auf:
- ein Schnittkraftsensor, der eingerichtet ist, um eine Kraft zum Antreiben mindestens einer das Erntegut schneidenden Komponente der Erntemaschine zu erfassen und ein Schnittkraftsignal zu erzeugen,
- ein Reibkraftsensor, der eingerichtet ist, um eine Kraft zum Antreiben mindestens einer das Erntegut fördernden und/oder verarbeitenden Komponente der Erntemaschine zu erfassen und ein Reibkraftsignal zu erzeugen,
- ein Feuchtesensor, der eingerichtet ist, um eine Feuchte des Ernteguts zu erfassen und ein Feuchtesignal zu erzeugen.

Des Weiteren weist die Erntemaschine eine Auswertevorrichtung auf, die dazu eingerichtet ist, die von den mindestens zwei der Sensoren erzeugten Signale auszuwerten und auf Grundlage der Auswertung eine Entwicklung einer Strohzähigkeit des Ernteguts und/oder eines Reibwerts des Ernteguts zu ermitteln.

Die das Erntegut schneidende Komponente kann beispielsweise ein Mähmesser sein. Alternativ kann ein Erntevorsatz die das Erntegut schneidende Komponente darstellen, wobei die Kraft zum Antreiben des Erntevorsatzes auch anteilig Kräfte zum Fördern des Ernteguts in dem Erntevorsatz umfassen kann, beispielsweise zum Fördern mit einer Querförderschnecke. Der Schnittkraftsensor misst die Kraft zum Antreiben der das Erntegut schneidenden Komponente. Das Schnittkraftsignal ist ein die gemessene Kraft zum Antreiben der das Erntegut schneidenden Komponente repräsentierendes Signal. Sofern ein Anteil der von dem Schnittkraftsensor gemessenen Kraft zum Antreiben der das Erntegut schneidenden Komponente auf das Fördern des Ernteguts entfallen kann, überwiegt der auf das Schneiden entfallende Anteil, der beispielsweise mindestens zwei Drittel der gemessenen Kraft ausmacht.

Die das Erntegut fördernde bzw. verarbeitende Komponente kann beispielsweise ein Schrägförderer oder eine Dreschtrommel sein. Alternativ kann ein Dreschwerk die das Erntegut fördernde und verarbeitende Komponente darstellen, wobei die Kraft zum antreiben des Dreschwerks sowohl Kräfte zum Fördern, als auch Kräfte zum Verarbeiten des Ernteguts umfasst. Der Reibkraftsensor misst die Kraft zum Antreiben der das Erntegut fördernden und/oder verarbeitenden Komponente. Das Reibkraftsignal ist ein die gemessene Kraft zum Antreiben der das Erntegut fördernden und/oder verarbeitenden Komponente repräsentierendes Signal.

Der Feuchtesensor misst eine Feuchte des Ernteguts. Das Feuchtesignal ist ein die gemessene Feuchte des Ernteguts repräsentierendes Signal.

Die Auswertevorrichtung ist beispielsweise ein Computer, mit dem ein Programm ausgeführt wird, um die Signale auszuwerten. Die Auswertevorrichtung kann die ausgewerteten Signale in einem Speichermedium aufzeichnen. Das Auswerten der Signale erfolgt beispielsweise durch in dem Programm definierte Algorithmen oder Zuordnungstabellen, um bestimmten Verläufen der Signale die entsprechende Entwicklung der Strohzähigkeit und des Reibwerts des Ernteguts zuzuordnen. Die Zuordnung kann beispielsweise auf einer empirischen Auswertung der Signale beruhen. Die Auswertevorrichtung kann mit einem Steuergerät der Erntemaschine verbunden sein, um auf Grundlage der ermittelten Entwicklung der Strohzähigkeit und des Reibwerts des Ernteguts in eine Antriebssteuerung der das Erntegut schneidenden und/oder verarbeitenden Komponenten oder in einen Motorsteuerung einzugreifen. Beispielsweise kann die Fahrgeschwindigkeit der Erntemaschine angepasst werden. Alternativ oder zusätzlich kann die ermittelte Entwicklung der Strohzähigkeit und des Reibwerts des Ernteguts ausgegeben werden, beispielsweise in optischer und/oder akustischer Form, um eine Bedienperson zu informieren.

Ein Vorteil besteht darin, dass die Einstellung der Fahrgeschwindigkeit und der Erntegut schneidenden und verarbeitenden Komponenten nicht ausschließlich vom Durchsatz an Erntegut abhängig ist, sondern dass auch dessen Druscheignung in Bezug auf die Strohzähigkeit und den Reibwert berücksichtigt wird. Eine derart optimal eingestellte Erntemaschine kann Drusch- und/oder Qualitätsverluste vermeiden und ist weniger anfällig für Verstopfungen und Gutflussstörungen. Unnötige Reduzierung der Fahrgeschwindigkeit und des Erntegutdurchsatzes werden vermieden, sodass das Leistungspotenzial der Erntemaschine vorteilhaft ausgeschöpft werden kann.

Die Sensoranordnung kann weiterhin einen Positionssensor umfassen, wobei der Positionssensor dazu eingerichtet ist, eine Messerposition der das Erntegut schneidenden Komponente zu erfassen und ein Positionssignal auszugeben. Die Auswertevorrichtung ist beispielsweise ferner dazu eingerichtet, das Schnittkraftsignal in Abhängigkeit von der Messerposition der das Erntegut schneidenden Komponente auszuwerten.

Das erste Verfahren zur Ermittlung von Eigenschaften von Erntegut beim Verarbeiten des Ernteguts mit einer Erntemaschine umfasst mindestens zwei der folgenden Schritte a, b und c zum Erzeugen von Signalen:
a) Erfassen einer Kraft zum Antreiben mindestens einer das Erntegut schneidenden Komponente der Erntemaschine und Erzeugen eines Schnittkraftsignals;
b) Erfassen einer Kraft zum Antreiben mindestens einer das Erntegut fördernden und/oder verarbeitenden Komponente der Erntemaschine und Erzeugen eines Reibkraftsignals;
c) Erfassen einer Feuchte des Ernteguts und Erzeugen eines Feuchtesignals;
wobei die mindestens zwei erzeugten Signale ausgewertet werden und wobei eine Entwicklung einer Strohzähigkeit des Ernteguts und/oder eines Reibwerts des Ernteguts auf Grundlage der ausgewerteten Signale ermittelt wird.

Das zweite Verfahren zur Ermittlung von Eigenschaften von Erntegut auf einem Feld sieht vor, dass Vorinformationen über die Eigenschaften des Ernteguts in einer Karte des Felds mit auf dem Feld beim Verarbeiten des Ernteguts mit einer Erntemaschine ermittelten Messdaten der Eigenschaften des Ernteguts abgeglichen werden, wobei zum Ermitteln der Messdaten mindestens einer der folgenden Schritte a, b und c zum Erzeugen von Signalen ausgeführt wird:
a) Erfassen einer Kraft zum Antreiben mindestens einer das Erntegut schneidenden Komponente (6) der Erntemaschine und Erzeugen eines Schnittkraftsignals;
b) Erfassen einer Kraft zum Antreiben mindestens einer das Erntegut fördernden und/oder verarbeitenden Komponente (7) der Erntemaschine und Erzeugen eines Reibkraftsignals,
c) Erfassen einer Feuchte des Ernteguts und Erzeugen eines Feuchte-signals;
wobei das mindestens eine erzeugte Signal ausgewertet wird und wobei eine Entwicklung einer Strohzähigkeit des Ernteguts und/oder eines Reibwerts des Ernteguts auf Grundlage der ausgewerteten Signale ermittelt wird.

Ein Vorteil besteht darin, dass die Strohzähigkeit und der Reibwert von Nichtkornbestandteilen des Ernteguts berücksichtigt werden können.

Gemäß einer Ausführungsform des zweiten Verfahrens ist vorgesehen, dass aus den Vorinformationen und den Messdaten eine Vorhersagekarte des Felds mit aktualisierten Eigenschaften des Ernteguts erstellt wird.

Gemäß einer weiteren Ausführungsform des zweiten Verfahrens ist vorgesehen, dass die Vorhersagekarte mittels eines prädiktiven Modells erstellt wird.

Gemäß einer weiteren Ausführungsform des zweiten Verfahrens ist vorgesehen, dass geographische Informationsdaten über den Ort der Ermittlung der Messdaten auf dem Feld abgerufen werden.

Gemäß einer weiteren Ausführungsform des zweiten Verfahrens ist vorgesehen, dass das Feld auf Grundlage der Vorinformationen in eine endliche Anzahl von Bereichen mit übereinstimmenden Wachstumsbedingungen eingeteilt wird, wobei die in einem der Bereiche erstmals ermittelten Messdaten für den gesamten Bereich mit den Vorinformationen abgeglichen werden.

Nachfolgen beschriebene Ausführungsformen beziehen sich auf das erste Verfahren und das zweite Verfahren gleichermaßen.

Beim Auswerten der Signale kann gemäß einer Ausführungsform auf Grundlage einer Änderung und/oder einer Richtung der Änderung und/oder eines Gradienten der Änderung des jeweiligen Signals auf die Entwicklung der Strohzähigkeit und/oder des Reibwerts geschlossen werden. Sofern nachfolgend angegeben ist, dass auf die Entwicklung der Strohzähigkeit und/oder des Reibwerts geschlossen wird, kann diese als ermittelte Entwicklung der Strohzähigkeit und/oder des Reibwerts weiter verarbeitet werden, beispielsweise um auf Grundlage der ermittelten Entwicklung in die Antriebssteuerung der das Erntegut schneidenden und/oder verarbeitenden Komponenten oder in die Motorsteuerung einzugreifen. Alternativ oder zusätzlich kann die ermittelte Entwicklung der Strohzähigkeit und des Reibwerts des Ernteguts ausgegeben werden, beispielsweise in optischer und/oder akustischer Form, um die Bedienperson zu informieren.

Gemäß einer Ausführungsform können die Signale wiederholt während einer Auswertezeitspanne ausgewertet werden, wobei die jeweils ermittelte Entwicklung der Strohzähigkeit und des Reibwerts am Ende der Auswertezeitspanne ausgegeben wird.

Wenn beim Auswerten der Signale eine gleichbleibende Strohzähigkeit und ein gleichbleibender Reibwert ermittelt werden, kann bei einer Veränderung der Antriebskräfte der Komponenten der Erntemaschine beispielsweise auf eine Änderung des Durchsatzes an Erntegut geschlossen werden. Gemäß einer Ausführungsform kann die Änderung des Durchsatzes an Erntegut mit dem in der WO 2019/008071 A1 beschriebenen Verfahren ermittelt werden. Wenn die Veränderung der Antriebskräfte der Komponenten der Erntemaschine weder auf die Änderung des Durchsatzes an Erntegut noch auf die Änderung der Strohzähigkeit oder des Reibwerts zurückzuführen sind, ist dies ein Hinweis auf eine mögliche Störung, die so vorteilhaft frühzeitig erkannt und behoben werden kann.

Gemäß einer weiteren Ausführungsform ist vorgesehen, dass das Auswerten des Schnittkraftsignals und des Feuchtesignals nach folgenden Vorgaben erfolgt:
- bei einer Änderung des Schnittkraftsignals und gleichbleibendem Feuchtesignal wird auf eine gleichbleibende Strohzähigkeit und einen gleichbleibenden Reibwert geschlossen;
- bei gleichgerichteten Änderungen des Schnittkraftsignals und des Feuchtesignals wird auf eine Änderung der Strohzähigkeit geschlossen;
- bei gleichbleibendem Schnittkraftsignal und einer Änderung des Feuchtesignals wird auf eine Änderung des Reibwerts geschlossen.

Gemäß einer weiteren Ausführungsform ist vorgesehen, dass das Auswerten des Schnittkraftsignals und des Reibkraftsignals nach folgenden Vorgaben erfolgt:
- bei Änderungen des Schnittkraftsignals und des Reibkraftsignals mit gleichen Änderungsgradienten wird auf eine gleichbleibende Strohzähigkeit und einen gleichbleibenden Reibwert geschlossen;
- bei Änderungen des Schnittkraftsignals und des Reibkraftsignals, wobei ein Änderungsgradient des Schnittkraftsignals größer ist als ein Änderungsgradient des Reibkraftsignals, wird auf eine Änderung der Strohzähigkeit geschlossen;
- bei Änderungen des Schnittkraftsignals und des Reibkraftsignals, wobei ein Änderungsgradient des Reibkraftsignals größer ist als ein Änderungsgradient des Schnittkraftsignals, wird auf eine Änderung des Reibwerts geschlossen.

Gemäß einer weiteren Ausführungsform ist vorgesehen, dass das Auswerten des Schnittkraftsignals, des Reibkraftsignals und des Feuchtesignals nach folgenden Vorgaben erfolgt:
- bei Änderungen des Schnittkraftsignals und des Reibkraftsignals mit gleichen Änderungsgradienten und bei gleichbleibendem Feuchtesignal wird auf eine gleichbleibende Strohzähigkeit und einen gleichbleibenden Reibwert geschlossen;
- bei Änderungen des Schnittkraftsignals und des Reibkraftsignals, wobei ein Änderungsgradient des Schnittkraftsignals größer ist als ein Änderungsgradient des Reibkraftsignals, und bei Änderung des Feuchtesignals, wird auf eine Änderung der Strohzähigkeit geschlossen;
- bei Änderungen des Schnittkraftsignals und des Reibkraftsignals, wobei ein Änderungsgradient des Reibkraftsignals größer ist als ein Änderungsgradient des Schnittkraftsignals, und bei Änderung des Feuchtesignals, wird auf eine Änderung des Reibwerts geschlossen.

Gemäß einer weiteren Ausführungsform ist vorgesehen, dass eine Messerposition der das Erntegut schneidenden Komponente als weiterer Parameter erfasst wird, wobei das Auswerten des Schnittkraftsignals unter Berücksichtigung der Position erfolgt. Das Schnittkraftsignal wird beispielsweise nur in Positionen ausgewertet wird, in denen Erntegut geschnitten wird. Weiterhin kann das Schnittkraftsignal in Positionen, in denen kein Erntegut geschnitten wird, als ein indirekt die Kraft zum Antreiben einer das Erntegut fördernden Komponente repräsentierendes Reibkraftsignal ausgewertet werden.

Gemäß einer weiteren Ausführungsform ist vorgesehen, dass das Erfassen in den Schritten a, b und c mit Sensoren erfolgt, wobei mindestens zwei der folgenden Sensoren verwendet werden:
- in Schritt a ein Schnittkraftsensor zum Erfassen der Kraft und zum Erzeugen des Schnittkraftsignals;
- in Schritt b ein Reibkraftsensor zum Erfassen der Kraft und zum Erzeugen des Reibkraftsignals;
- in Schritt c ein Feuchtesensor zum Erfassen der Feuchte und zum Erzeugen des Feuchtesignals.

Das Verarbeiten des Ernteguts kann mit der eingangs beschriebenen Erntemaschine erfolgen.

Nachfolgend werden sowohl das Verfahren, als auch die Erntemaschine anhand eines Ausführungsbeispiels mit Bezug auf die beiliegenden Zeichnungen näher erläutert.

Die Figur 1 zeigt eine Ausführungsform einer Erntemaschine in einer schematischen Teildarstellung;
Die Figur 2 zeigt ein Anwendungsbeispiel eines Verfahrens zur Ermittlung von Eigenschaften von Erntegut.

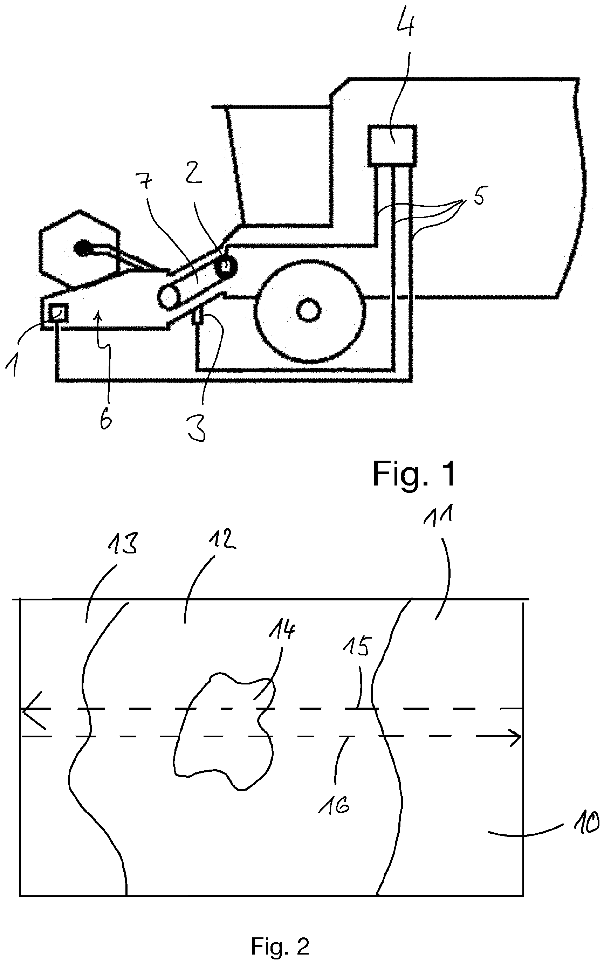

Die in der Figur 1 schematisch dargestellte landwirtschaftliche Erntemaschine kann beispielsweise ein Mähdrescher, Schwadmäher oder Feldhäcksler zum Verarbeiten von Erntegut. Nach dem Schneiden kann das Erntegut bestehend aus Kornbestandteilen und Nichtkornbestandteilen durch die Verarbeitung getrennt werden. Die Erntemaschine weist eine Sensoranordnung mit einem Schnittkraftsensor 1, einem Reibkraftsensor 2 und einem Feuchtesensor 3 auf, wobei jeder der Sensoren 1, 2, 3 auch mehrfach vorhanden sein kann, beispielsweise um eine Redundanz zu erzeugen. Des Weiteren weist die Erntemaschine eine Auswertevorrichtung 4 auf, die dazu eingerichtet ist, von den Sensoren 1, 2, 3 erzeugte Signale, die beispielsweise über Datenleitungen 5 übertragen werden, auszuwerten und auf Grundlage der Auswertung eine Entwicklung einer Strohzähigkeit des Ernteguts und/oder eines Reibwerts des Ernteguts zu ermitteln. Zur Auswertung sind mindestens zwei der Sensoren 1, 2, 3 bzw. der Signale erforderlich. Die Sensoranordnung mit den drei Sensoren Schnittkraftsensor 1, Reibkraftsensor 2 und Feuchtesensor 3, bzw. die Auswertung aller Signale erlaubt vorteilhaft eine präzisere Ermittlung der Strohzähigkeit und/oder des Reibwerts. Darüber hinaus erlaubt die Auswertung aller Signale eine Plausibilitätsprüfung der Signale zur Erkennung von Störungen und eine bessere Differenzierbarkeit der Reib- und Zähigkeitsänderungen bei gleichzeitiger Änderung des Gutflusses. Zur besseren Differenzierung von Gutflussänderungen kann zudem noch eine Fahrgeschwindigkeit der Erntemaschine als Fahrgeschwindigkeitssignal mit in der Auswerteeinheit verarbeitet werden.

Der Schnittkraftsensor 1 ist eingerichtet ist, um eine Kraft zum Antreiben mindestens einer das Erntegut schneidenden Komponente 6 der Erntemaschine zu erfassen und ein Schnittkraftsignal zu erzeugen. Die das Erntegut schneidenden Komponente 6 kann beispielsweise ein Mähmesser sein. Alternativ kann ein Erntevorsatz die das Erntegut schneidende Komponente 6 darstellen.

Der Reibkraftsensor 2 ist eingerichtet, um eine Kraft zum Antreiben mindestens einer das Erntegut fördernden und/oder verarbeitenden Komponente 7 der Erntemaschine zu erfassen und ein Reibkraftsignal zu erzeugen. Die das Erntegut fördernde bzw. verarbeitende Komponente 7 kann beispielsweise ein Schrägförderer oder eine Dreschtrommel (nicht dargestellt) sein. Alternativ kann ein Dreschwerk die das Erntegut fördernde und verarbeitende Komponente 7 darstellen.

Der Feuchtesensor 3 ist eingerichtet, um eine Feuchte des Ernteguts zu erfassen und ein Feuchtesignal zu erzeugen. Der Feuchtesensor 3 misst eine Feuchte des Ernteguts, wobei die Erntegutfeuchte im Gesamtdurchsatz aus Kornbestandteilen und Nichtkornbestandteilen oder im Teildurchsatz der Nichtkornbestandteile gemessen werden kann. Die Feuchtemessung beruht beispielsweise auf einem kapazitiven Messprinzip. Mittels eines im Erntegutstrom aufgebauten elektrischen Felds werden dielektrische Eigenschaften des Korns gemessen, die bei gleichbleibender Dichte des Erntegutstroms im Wesentlichen durch dessen Wassergehalt bestimmt werden.

Die Auswertevorrichtung 4 ist beispielsweise ein Computer, mit dem ein Programm ausgeführt wird, um die Signale auszuwerten.

Gutflussänderungen, also Veränderungen des Durchsatzes an Erntegut und Veränderungen der Dichte des Erntegutstroms, können die Messungen des Schnittkraftsensors 1, des Reibkraftsensors 2 und des Feuchtesensors 3 beeinflussen. Diese können bei der Auswertung mit der Auswertevorrichtung 4 kompensiert werden.

Das Verfahren zur Ermittlung von Eigenschaften des Ernteguts beim Verarbeiten mit der Erntemaschine umfasst mindestens zwei der folgenden Schritte a, b und c zum Erzeugen von Signalen:
a) Erfassen der Kraft zum Antreiben der das Erntegut schneidenden Komponente 6 der Erntemaschine und Erzeugen eines Schnittkraftsignals;
b) Erfassen der Kraft zum Antreiben der das Erntegut fördernden und/oder verarbeitenden Komponente 7 der Erntemaschine und Erzeugen eines Reibkraftsignals;
c) Erfassen einer Feuchte des Ernteguts und Erzeugen eines Feuchtesignals;
wobei die mindestens zwei erzeugten Signale ausgewertet werden und wobei die Entwicklung der Strohzähigkeit des Ernteguts und/oder eines Reibwerts des Ernteguts auf Grundlage der ausgewerteten Signale ermittelt wird.

Die Ernteguteigenschaften Strohzähigkeit und Reibwert sind für die mechanische Verarbeitung während der Ernte von Bedeutung. Weiter werden die Eigenschaften des Ernteguts durch Beiwuchs, beispielsweise von Unkraut, beeinflusst. Dieser kann die Zähigkeit und Reibeigenschaften der Nichtkornbestandteile, bestehend aus Stroh, Spreu, Spindeln und Unkraut, beeinflussen. Zudem wird das Verhältnis zwischen Kornbestandteilen und Nichtkornbestandteilen geändert. Je feuchter und unabgereifter eine Getreidepflanze ist, desto schlechter lässt sich das Korn aus der Ähre auslösen. Zudem kann das ausgelöste Korn eine Strohmatte aus feuchten und zähen Halmen schlechter durchdringen. Unkraut im Erntegut verstärkt diesen Effekt. Höhere Feuchte am Halm sorgt für schlechtere Reibeigenschaften und im Extremfall für Anhaften von Körnern am Stroh. Die Fliehkräfte und die Schwerkraft reichen unter Umständen nicht mehr aus, um genügend Körner aus der Strohmatte zu separieren. Als Folge steigen die Ernteverluste. Als Gegenmaßname kann die Dreschtrommeldrehzahl erhöht und der Dreschspalt verkleinert werden. Durch die Drehzahlerhöhung erfolgen mehr Schläge zum Ausdrusch des Korns und die Fliehkräfte zur Separation erhöhen sich. Jedoch steigt durch eine höhere Bearbeitungsintensität auch die Gefahr von Bruchkorn und in Verbindung mit dem höheren Reibwert der Nichtkornbestandteile steigt die Gefahr von Verstopfungen und Gutflussstörungen. Trockenes Erntegut besitzt ein besseres Auslösevermögen der Körner aus der Ähre, jedoch brechen die Körner schneller durch mechanische Belastung. Trockenes bzw. mürbes Stroh ist ebenfalls brüchiger und darf in der Dreschtrommel nicht zu stark belastet werden. Andernfalls entsteht Kurzstroh, welches die Reinigungsorgane der Erntemaschine überlastet. Um die Druschqualität bei geringen Verlusten aufrecht zu erhalten, kann die Bearbeitungsintensität in der Dreschtrommel reduziert werden.

Die Feuchte im Nichtkornbestandteil des Ernteguts kann mehrere Ursachen haben. Ist eine Pflanze zum Zeitpunkt der Ernte nicht vollständig abgestorben und ausgetrocknet, besitzt die Pflanze grüne Fasern und einen eigenen Wasserhaushalt. Durch die grünen Fasern kann die Pflanze eine hohe Zähigkeit sowie höhere Reibwerte, z.B. durch eine Wachsschicht, aufweisen und kann somit schwerer mechanisch zu verarbeiten sein. Eine weitere Ursache für einen erhöhten Feuchtegehalt kann das Aufnehmen von Wasser durch Witterung sein. Abgestorbene Pflanzenteile können durch Luftfeuchte, Regen oder Taunässe Wasser aufnehmen. In diesem Fall kann sich der Reibwert der Nichtkornbestandteile erhöhen. Eine Feuchtemessung zur Bestimmung der Feuchte des Ernteguts, z.B. durch Leitfähigkeitsmessung, gibt dabei nur ein Signal für den Wassergehalt wieder. Ein Rückschluss auf die Ursache der Feuchte ist dadurch nicht möglich. Somit kann durch eine reine Feuchtemessung nicht direkt auf die Zähigkeit oder Reibeigenschaften des Ernteguts geschlossen werden. Durch die Auswertung von mindestens zwei der Signale Schnittkraftsignal, Reibkraftsignal und Feuchtesignal lässt sich hingegen vorteilhaft auf die Entwicklung der Strohzähigkeit des Ernteguts und/oder eines Reibwerts des Ernteguts auf schließen. Die Auswertung aller drei Signale erlaubt vorteilhaft eine präzisere Bestimmung der Entwicklung.

Eine Ausführungsform des Verfahrens zur Ermittlung von Eigenschaften von Erntegut wird mit Bezug auf die Figur 2 beschrieben, die ein Feld 10 zeigt. Das Verfahren kann folgende Schritte umfassen:
- Ermitteln von Wachstumszonen des Feldes 10 aus Vorabinformationen in Form von Kartenmaterial aus einer Fernerkundung in Abhängigkeit der geografischen Position.
- Einteilung des Felds 10 in Wachstumszonen 11, 12, 13, 14, innerhalb derer jeweils gleiche Wachstumsbedingungen der Vegetation vorherrschen.
- Auswertung des zeitlichen Verlaufs von Vegetationsindex und Abreife und Auswertung des Vegetationsindex von Unkraut nach der Abreife.

Optional kann als zusätzliches Kartenmaterial die Ertragskartierung aus vergangenen Ernten genutzt werden.

Die realen Eigenschaften des Ernteguts werden unter Erntebedingungen durch Messdaten aus einer Antriebsleistung eines ernteguttrennenden, translatorischen Schnittsystems in Abhängigkeit der geografischen Position bestimmt. Weitere Sensordaten aus der Erntemaschine, wie Fahrgeschwindigkeit, Kornertrag oder Körnerverluste, können in die Ermittlung mit aufgenommen werden. Die Antriebsleistung des Schnittsystems wird in Abhängigkeit der Messerposition ausgewertet. Aus dem Leistungsverlauf lässt sich die Schnittleistung ermitteln woraus sich die Entwicklung des Erntegutdurchsatzes abschätzen lässt. Zudem wird das Verhältnis der Schnittleistung im Bezug zur Leistung im Überhubbereich ausgewertet, woraus sich der Verlauf der Erntegutzähigkeit ableiten lässt. Aus der Auswertung der Schnittsystemleistung in Kombination mit Fahrgeschwindigkeit und Korndurchsatz lässt sich die Bestandsdichte des jeweiligen geografischen Standorts auf dem Feld bestimmen. Mit der Schnittsystemleistung lässt sich die Auflösung erhöhen. Aus der Auswertung der Erntegutzähigkeit in Kombination mit der Schnittsystemleistung und Bestandsdichte lässt sich ein Maß für die Abreife des Bestands und der Verunkrautung durch Grünwuchs bestimmen.

Aus den Vorinformationen zu Daten der Bestandsdichte sowie der Abreife und Verunkrautung lässt sich die jeweilige Erntesituation in Klassen einteilen, in denen Arbeitsorgane der Erntemaschine anders eigestellt werden, um in der jeweiligen Situation ein optimales Arbeitsergebnis zu erzielen. Mögliche Klasse sind: Durchschnittliche Erntebedingungen, leichte Erntebedingungen bei trockenerem oder dünnerem Bestand, schwere Erntebedingungen bei hoher Bestandsdichte oder späteren Abreife, Verunkrautung bei Grünwuchs.

Zur Zuordnung der zu erwartenden Erntebedingungen in den Wachstumszonen 11, 12, 13, 14 wird bei der Durchfahrt mit der Erntemaschine entlang einer ersten Fahrspur 15 durch eine der mittels Kartenmaterial aus den Vorinformationen ermittelten Wachstumszonen 11, 12, 13, 14 die Klassifizierung des Bestands den Erntebedingungen vor Ort für die jeweilige Wachstumszone 11, 12, 13, 14 zugeordnet werden. Die Klassifizierung wird mit der geografischen Lage und dem Kartenmaterial abgeglichen. Mehrerer Wachstumszonen 11, 12, 13, 14 werden mittels Durchfahren klassifiziert. Die Erntemaschine kann dadurch bereits bei der Durchfahrt entlang der zweiten Fahrspur 16 während des Wechsels einer Wachstumszone vorausschauend eingestellt werden. Eine Klassifizierung der Wachstumszonen 11, 12, 13, 14 und eine Zuordnung von Bestandseigenschaften kann auch anhand der Vorinformation in Form von Satellitendaten erfolgen. Die Klassifizierung anhand der durch den Schnittkraftsensor, Reibkraftsensor und Feuchtesensor ermittelten Daten kann die korrekte Zuordnung überprüfen, gegebenenfalls korrigieren, bzw. die Auflösung erhöhen.

### Bezugszeichenliste

- 1: Schnittkraftsensor
- 2: Reibkraftsensor
- 3: Feuchtesensor
- 4: Auswertevorrichtung
- 5: Datenleitungen
- 6: Erntegut schneidenden Komponente
- 7: Erntegut fördernden und/oder verarbeitenden Komponente
- 10: Feld
- 11: Wachstumsszone
- 12: Wachstumsszone
- 13: Wachstumsszone
- 14: Wachstumsszone
- 15: Erste Fahrspur
- 16: Zweite Fahrspur

## Patentansprüche

1. Erntemaschine zum Verarbeiten von Erntegut, aufweisend eine Sensoranordnung mit mindestens zwei der folgenden Sensoren zur Erzeugung von Signalen:
- ein Schnittkraftsensor (1), der eingerichtet ist, um eine Kraft zum Antreiben mindestens einer das Erntegut schneidenden Komponente (6) der Erntemaschine zu erfassen und ein Schnittkraftsignal zu erzeugen,
- ein Reibkraftsensor (2), der eingerichtet ist, um eine Kraft zum Antreiben mindestens einer das Erntegut fördernden und/oder verarbeitenden Komponente (7) der Erntemaschine zu erfassen und ein Reibkraftsignal zu erzeugen,
- ein Feuchtesensor (3), der eingerichtet ist, um eine Feuchte des Ernteguts zu erfassen und ein Feuchtesignal zu erzeugen, und
eine Auswertevorrichtung (4), die dazu eingerichtet ist, die von den mindestens zwei Sensoren (1, 2, 3) erzeugten Signale auszuwerten und auf Grundlage der Auswertung eine Entwicklung einer Strohzähigkeit des Ernteguts und/oder eines Reibwerts des Ernteguts zu ermitteln.

2. Erntemaschine nach Anspruch 1, **dadurch gekennzeichnet, dass** die Sensoranordnung einen Positionssensor umfasst, wobei der Positionssensor dazu eingerichtet ist, eine Messerposition der das Erntegut schneidenden Komponente (6) zu erfassen und ein Positionssignal auszugeben.

3. Erntemaschine nach Anspruch 2, **dadurch gekennzeichnet, dass** die Auswertevorrichtung (4) dazu eingerichtet ist, das Schnittkraftsignal in Abhängigkeit von der Messerposition der das Erntegut schneidenden Komponente auszuwerten.

4. Verfahren zur Ermittlung von Eigenschaften von Erntegut beim Verarbeiten des Ernteguts mit einer Erntemaschine, mit mindestens zwei der folgenden Schritte a, b und c zum Erzeugen von Signalen:
a) Erfassen einer Kraft zum Antreiben mindestens einer das Erntegut schneidenden Komponente (6) der Erntemaschine und Erzeugen eines Schnittkraftsignals;
b) Erfassen einer Kraft zum Antreiben mindestens einer das Erntegut fördernden und/oder verarbeitenden Komponente (7) der Erntemaschine und Erzeugen eines Reibkraftsignals,
c) Erfassen einer Feuchte des Ernteguts und Erzeugen eines Feuchtesignals;
wobei die mindestens zwei erzeugten Signale ausgewertet werden und wobei eine Entwicklung einer Strohzähigkeit des Ernteguts und/oder eines Reibwerts des Ernteguts auf Grundlage der ausgewerteten Signale ermittelt wird.

5. Verfahren zur Ermittlung von Eigenschaften von Erntegut auf einem Feld, wobei Vorinformationen über die Eigenschaften des Ernteguts in einer Karte des Felds mit auf dem Feld beim Verarbeiten des Ernteguts mit einer Erntemaschine ermittelten Messdaten der Eigenschaften des Ernteguts abgeglichen werden, wobei zum Ermitteln der Messdaten mindestens einer der folgenden Schritte a, b und c zum Erzeugen von Signalen ausgeführt wird:
a) Erfassen einer Kraft zum Antreiben mindestens einer das Erntegut schneidenden Komponente (6) der Erntemaschine und Erzeugen eines Schnittkraftsignals;
b) Erfassen einer Kraft zum Antreiben mindestens einer das Erntegut fördernden und/oder verarbeitenden Komponente (7) der Erntemaschine und Erzeugen eines Reibkraftsignals,
c) Erfassen einer Feuchte des Ernteguts und Erzeugen eines Feuchtesignals;
und wobei das mindestens eine erzeugte Signal ausgewertet wird und wobei eine Entwicklung einer Strohzähigkeit des Ernteguts und/oder eines Reibwerts des Ernteguts auf Grundlage der ausgewerteten Signale ermittelt wird.

6. Verfahren nach Anspruch 5, **dadurch gekennzeichnet, dass** aus den Vorinformationen und den Messdaten eine Vorhersagekarte des Felds mit aktualisierten Eigenschaften des Ernteguts erstellt wird.

7. Verfahren nach einem der Ansprüche 5 oder 6, **dadurch gekennzeichnet, dass** das Feld auf Grundlage der Vorinformationen in eine endliche Anzahl von Bereichen mit übereinstimmenden Wachstumsbedingungen eingeteilt wird, wobei die in einem der Bereiche erstmals ermittelten Messdaten für den gesamten Bereich mit den Vorinformationen abgeglichen werden.

8. Verfahren nach einem der Ansprüche 4 bis 7, **dadurch gekennzeichnet, dass** beim Auswerten der Signale auf Grundlage einer Änderung und/oder einer Richtung der Änderung und/oder eines Gradienten der Änderung des jeweiligen Signals auf die Entwicklung der Strohzähigkeit und/oder des Reibwerts geschlossen wird.

9. Verfahren nach einem der Ansprüche 4 bis 8, **dadurch gekennzeichnet, dass** die Signale wiederholt während einer Auswertezeitspanne ausgewertet werden, wobei die jeweils ermittelte Entwicklung der Strohzähigkeit und des Reibwerts am Ende der Auswertezeitspanne ausgegeben wird.

10. Verfahren nach einem der Ansprüche 4 bis 9, **dadurch gekennzeichnet, dass** beim Auswerten der Signale auf eine Änderung eines Durchsatzes an Erntegut geschlossen wird, wenn eine gleichbleibende Strohzähigkeit und ein gleichbleibender Reibwert ermittelt werden.

11. Verfahren nach einem der Ansprüche 4 bis 10, **dadurch gekennzeichnet, dass** das Auswerten des Schnittkraftsignals und des Feuchtesignals nach folgenden Vorgaben erfolgt:
- bei einer Änderung des Schnittkraftsignals und gleichbleibendem Feuchtesignal wird auf eine gleichbleibende Strohzähigkeit und einen gleichbleibenden Reibwert geschlossen;
- bei gleichgerichteten Änderungen des Schnittkraftsignals und des Feuchtesignals wird auf eine Änderung der Strohzähigkeit geschlossen;
- bei gleichbleibendem Schnittkraftsignal und einer Änderung des Feuchte-signals wird auf eine Änderung des Reibwerts geschlossen.

12. Verfahren nach einem der Ansprüche 4 bis 11, **dadurch gekennzeichnet, dass** das Auswerten des Schnittkraftsignals und des Reibkraftsignals nach folgenden Vorgaben erfolgt:
- bei Änderungen des Schnittkraftsignals und des Reibkraftsignals mit gleichen Änderungsgradienten wird auf eine gleichbleibende Strohzähigkeit und einen gleichbleibenden Reibwert geschlossen;
- bei Änderungen des Schnittkraftsignals und des Reibkraftsignals, wobei ein Änderungsgradient des Schnittkraftsignals größer ist als ein Änderungsgradient des Reibkraftsignals, wird auf eine Änderung der Strohzähigkeit geschlossen;
- bei Änderungen des Schnittkraftsignals und des Reibkraftsignals, wobei ein Änderungsgradient des Reibkraftsignals größer ist als ein Änderungsgradient des Schnittkraftsignals, wird auf eine Änderung des Reibwerts geschlossen.

13. Verfahren nach einem der Ansprüche 4 bis 9, **dadurch gekennzeichnet, dass** das Auswerten des Schnittkraftsignals, des Reibkraftsignals und des Feuchte-signals nach folgenden Vorgaben erfolgt:
- bei Änderungen des Schnittkraftsignals und des Reibkraftsignals mit gleichen Änderungsgradienten und bei gleichbleibendem Feuchtesignal wird auf eine gleichbleibende Strohzähigkeit und einen gleichbleibenden Reibwert geschlossen;
- bei Änderungen des Schnittkraftsignals und des Reibkraftsignals, wobei ein Änderungsgradient des Schnittkraftsignals größer ist als ein Änderungsgradient des Reibkraftsignals, und bei Änderung des Feuchtesignals, wird auf eine Änderung der Strohzähigkeit geschlossen;
- bei Änderungen des Schnittkraftsignals und des Reibkraftsignals, wobei ein Änderungsgradient des Reibkraftsignals größer ist als ein Änderungsgradient des Schnittkraftsignals, und bei Änderung des Feuchtesignals, wird auf eine Änderung des Reibwerts geschlossen.

14. Verfahren nach einem der Ansprüche 4 bis 10, **dadurch gekennzeichnet, dass** eine Messerposition der das Erntegut schneidenden Komponente als weiterer Parameter erfasst wird, wobei das Auswerten des Schnittkraftsignals unter Berücksichtigung der Position erfolgt, wobei das Schnittkraftsignal nur in Positionen ausgewertet wird, in denen Erntegut geschnitten wird.

15. Verfahren nach Anspruch 14, **dadurch gekennzeichnet, dass** das Schnittkraftsignal in Positionen, in denen kein Erntegut geschnitten wird, als ein indirekt die Kraft zum Antreiben einer das Erntegut fördernden Komponente repräsentierendes Reibkraftsignal ausgewertet wird.

## Claims

1. Harvesting machine for processing crop, comprising
a sensor arrangement having at least two of the following sensors for generating signals:
- a cutting force sensor (1) adapted to detect a force for driving at least one component (6) of the harvesting machine cutting the crop and to generate a cutting force signal,
- a friction force sensor (2) adapted to detect a force for driving at least one component (7) of the harvesting machine which conveys and/or processes the crop and to generate a friction force signal,
- a moisture sensor (3) adapted to detect a moisture of the crop and to generate a moisture signal, and
an evaluation device (4) adapted to evaluate the signals generated by the at least two sensors (1, 2, 3) and to determine a development of a straw toughness of the crop and/or a friction value of the crop on the basis of the evaluation.

2. Harvesting machine according to claim 1, **characterized in that** the sensor arrangement comprises a position sensor, the position sensor being adapted to detect a knife position of the component (6) cutting the crop and to output a position signal.

3. Harvesting machine according to claim 2, **characterized in that** the evaluation device (4) is adapted to evaluate the cutting force signal as a function of the knife position of the component cutting the crop.

4. Method for determining properties of crop during processing of the crop with a harvesting machine, comprising at least two of the following steps a, b and c for generating signals:
a) detecting a force for driving at least one component (6) of the harvesting machine cutting the crop and generating a cutting force signal;
b) detecting a force for driving at least one component (7) of the harvesting machine conveying and/or processing the crop and generating a friction force signal,
c) detecting a moisture of the crop and generating a moisture signal;
wherein the at least two generated signals are evaluated and wherein a development of a straw toughness of the crop and/or a friction value of the crop is determined based on the evaluated signals.

5. Method for determining properties of crop in a field, wherein preliminary information about the properties of the crop in a map of the field is compared with measurement data of the properties of the crop determined in the field when processing the crop with a harvesting machine, wherein at least one of the following steps a, b and c for generating signals is carried out for determining the measurement data:
a) detecting a force for driving at least one component (6) of the harvesting machine cutting the crop and generating a cutting force signal;
b) detecting a force for driving at least one component (7) of the harvesting machine conveying and/or processing the crop and generating a friction force signal,
c) detecting of a moisture of the crop and generating a moisture signal;
and wherein the at least one generated signal is evaluated and wherein a development of a straw toughness of the crop and/or a friction value of the crop is determined based on the evaluated signals.

6. Method according to claim 5, **characterized in that** a prediction map of the field with updated properties of the crop is created from the preliminary information and the measurement data.

7. Method according to any one of claims 5 or 6, **characterized in that** the field is divided into a finite number of areas with matching growth conditions based on the preliminary information, wherein the measurement data for the entire area determined for the first time in one of the areas is compared with the preliminary information.

8. Method according to any one of claims 4 to 7, **characterized in that**, when evaluating the signals, the development of the straw toughness and/or the friction value is concluded on the basis of a change and/or a direction of the change and/or a gradient of the change of the respective signal.

9. Method according to one of claims 4 to 8, **characterized in that** the signals are repeatedly evaluated during an evaluation period, the respectively determined development of the straw toughness and the friction value being output at the end of the evaluation period.

10. Method according to any one of claims 4 to 9, **characterized in that** when evaluating the signals, a change in a throughput of crop is inferred when a constant straw toughness and a constant friction value are determined.

11. Method according to any one of claims 4 to 10, **characterized in that** the evaluation of the cutting force signal and the moisture signal is carried out according to the following specifications:
- in case of a change in the cutting force signal and a constant moisture signal, a constant straw toughness and a constant friction value is inferred;
- in case of rectified changes of the cutting force signal and the moisture signal, a change of the straw toughness is inferred;
- in case of a constant cutting force signal and a change in the moisture signal, a change in the friction value is inferred.

12. Method according to any one of claims 4 to 11, **characterized in that** the evaluation of the cutting force signal and the friction force signal is carried out according to the following specifications:
- in case of changes in the cutting force signal and the friction force signal with the same change gradients, a constant straw toughness and a constant friction value are inferred;
- in case of changes in the cutting force signal and the friction force signal, where a change gradient of the cutting force signal is greater than a change gradient of the friction force signal, a change in straw toughness is inferred;
- in the case of changes in the cutting force signal and the friction force signal, where a change gradient of the friction force signal is greater than a change gradient of the cutting force signal, a change in the friction value is inferred.

13. Method according to any one of claims 4 to 9, **characterized in that** the evaluation of the cutting force signal, the friction force signal and the moisture signal is carried out according to the following specifications:
- in case of changes in the cutting force signal and the friction force signal with the same change gradients and with a constant moisture signal, a constant straw toughness and a constant friction value are inferred;
- in case of changes in the cutting force signal and the friction force signal, where a change gradient of the cutting force signal is greater than a change gradient of the friction force signal, and for changes in the moisture signal, a change in straw toughness is inferred;
- in case of changes in the cutting force signal and the friction force signal, where a change gradient of the friction force signal is greater than a change gradient of the cutting force signal, and in case of change in the moisture signal, a change in the friction value is inferred.

14. Method according to one of the claims 4 to 10, **characterized in that** a knife position of the component cutting the crop is detected as a further parameter, the evaluation of the cutting force signal being carried out taking the knife position into account, the cutting force signal being evaluated only in knife positions in which crop is being cut.

15. The method according to claim 14, **characterized in that** the cutting force signal in knife positions in which no crop is cut is evaluated as a friction force signal indirectly representing the force for driving a component conveying the crop.

## Revendications

1. Engin d'abattage-façonnage permettant de traiter les produits de la récolte, comportant
un système de détection avec au moins deux des capteurs suivants pour produire des signaux :
- un capteur de force de coupe (1), qui est agencé pour saisir une force pour entraîner au moins un composant (6) coupant le produit de récolte de l'engin d'abattage-façonnage et produire un signal de force de coupe,
- un capteur de force de friction (2), qui est agencé pour saisir une force pour entraîner au moins un composant (7) transportant et/ou traitant le produit de récolte de l'engin d'abattage-façonnage et produire un signal de force de friction,
- un capteur d'humidité (3) qui est agencé pour saisir une humidité du produit de récolte et produire un signal d'humidité, et
un dispositif d'évaluation (4), qui est agencé pour évaluer les signaux produits par au moins deux capteurs (1, 2, 3) et déterminer sur la base de l'évaluation un développement d'une ténacité de la paille du produit de récolte et/ou d'un coefficient de friction du produit de récolte.

2. Engin d'abattage-façonnage selon la revendication 1, ***caractérisé en ce que*** le système de détection comprend un capteur de position, sachant que le capteur de position est agencé pour saisir une position de la lame de coupe du composant (6) coupant le produit de récolte et émettre un signal de position.

3. Engin d'abattage-façonnage selon la revendication 2, ***caractérisé en ce que*** le dispositif d'évaluation (4) est agencé pour évaluer le signal de force de coupe en fonction de la position de la barre de coupe du composant coupant le produit de récolte.

4. Procédé de détermination des propriétés du produit de récolte lors du traitement du produit de récolte avec un engin d'abattage-façonnage, avec au moins deux des étapes suivantes a, b et c pour produire des signaux :
a) saisie d'une force pour entraîner au moins un composant (6) coupant le produit de récolte de l'engin d'abattage-façonnage et production d'un signal de force de coupe,
b) saisie d'une force pour entraîner au moins un composant (7) transportant et/ou traitant le produit de récolte de l'engin d'abattage-façonnage et production d'un signal de force de friction,
c) saisie d'une humidité du produit de récolte et production d'un signal d'humidité,
sachant qu'au moins deux signaux produits sont évalués et sachant qu'un développement d'une ténacité de la paille du produit de récolte et/ou d'un coefficient de friction du produit de récolte est déterminé sur la base des signaux évalués.

5. Procédé de détermination des propriétés du produit de récolte sur un champ, sachant que des informations préalables sur les propriétés du produit de récolte sont ajustées dans une carte du champ avec des données de mesure des propriétés du produit de récolte déterminées sur le champ lors du traitement du produit de récolte avec un engin d'abattage-façonnage, sachant que pour déterminer les données de mesure au moins une des étapes suivantes a, b et c est exécutée pour produire des signaux :
a) saisie d'une force pour entraîner au moins un composant (6) coupant le produit de récolte de l'engin d'abattage-façonnage et production d'un signal de force de coupe,
b) saisie d'une force pour entraîner au moins un composant (7) transportant et/ou traitant le produit de récolte de l'engin d'abattage-façonnage et production d'un signal de force de friction,
c) saisie d'une humidité du produit de récolte et production d'un signal d'humidité,
et sachant qu'au moins un signal produit est évalué et sachant qu'un développement d'une ténacité de la paille du produit de récolte et/ou d'un coefficient de friction du produit de récolte est déterminé sur la base des signaux évalués.

6. Procédé selon la revendication 5, ***caractérisé en ce* qu'**une carte de prévisions du champ avec des propriétés actualisées du produit de récolte est établie à partir des informations préalables et des données de mesure.

7. Procédé selon la revendication 5 ou 6, ***caractérisé en ce que*** le champ est divisé en un nombre final de zones avec des conditions de croissance concordantes sur la base des informations préalables, sachant que les données de mesure déterminées pour la première fois dans une des zones sont ajustées pour toute la zone avec les informations préalables.

8. Procédé selon l'une quelconque des revendications 4 à *7, **caractérisé en ce que*** l'on conclut au développement de la ténacité de la paille et/ou du coefficient de friction lors de l'évaluation des signaux sur la base d'une variation et/ou d'une direction de la variation et/ou d'un gradient de la variation du signal respectif.

9. Procédé selon l'une quelconque des revendications 4 à *8, **caractérisé en ce que*** les signaux sont à nouveau évalués pendant une période d'évaluation, sachant que le développement respectivement déterminé de la ténacité de la paille et du coefficient de friction est fourni à la fin de la période d'évaluation.

10. Procédé selon l'une quelconque des revendications 4 à 9, ***caractérisé en ce que*** l'on conclut à une variation d'un débit en produit de récolte lors de l'évaluation des signaux, si une ténacité de la paille constante et un coefficient de friction constant sont déterminés.

11. Procédé selon l'une quelconque des revendications 4 à 10, ***caractérisé en ce que*** l'évaluation du signal de force de coupe et du signal d'humidité a lieu selon les consignes suivantes :
- conclusion faite quant à une ténacité de la paille constante et un coefficient de friction constant pour une variation du signal de force de coupe et d'un signal d'humidité constant,
- conclusion faite quant à une variation de la ténacité de la paille pour des variations de même orientation du signal de force de coupe et du signal d'humidité,
- conclusion faite quant à une variation du coefficient de friction pour un signal de force de coupe constant et une variation du signal d'humidité.

12. Procédé selon l'une quelconque des revendications 4 à 11, ***caractérisé en ce que*** l'évaluation du signal de force de coupe et du signal de force de friction a lieu selon les consignes suivantes :
- conclusion faite quant à une ténacité de la paille constante et un coefficient de friction constant pour des variations du signal de force de coupe et du signal de force de friction avec des gradients de variation identiques,
- conclusion faite quant à une variation de la ténacité de la paille pour des variations du signal de force de coupe et du signal de force de friction, sachant qu'un gradient de variation du signal de force de coupe est plus grand qu'un gradient de variation du signal de force de friction,
- conclusion faite quant à une variation du coefficient de friction pour des variations du signal de force de coupe et du signal de force de friction, sachant qu'un gradient de variation du signal de force de friction est plus grand qu'un gradient de variation du signal de force de coupe.

13. Procédé selon l'une quelconque des revendications 4 à *9, **caractérisé en ce que*** l'évaluation du signal de force de coupe, du signal de force de friction et du signal d'humidité a lieu selon les consignes suivantes :
- conclusion faite quant à une ténacité de la paille constante et un coefficient de friction constant pour des variations du signal de force de coupe et du signal de force de friction avec des gradients de variation identiques et pour un signal d'humidité constant,
- conclusion faite quant à une variation de la ténacité de la paille pour des variations du signal de force de coupe et du signal de force de friction, sachant qu'un gradient de variation du signal de force de coupe est plus grand qu'un gradient de variation du signal de force de friction et pour une variation du signal d'humidité,
- conclusion faite quant à une variation du coefficient de friction pour des variations du signal de force de coupe et du signal de force de friction, sachant qu'un gradient de variation du signal de force de friction est plus grand qu'un gradient de variation du signal de force de coupe, et pour une variation du signal d'humidité.

14. Procédé selon l'une quelconque des revendications 4 à 10, ***caractérisé en ce* qu'**une position de la barre de coupe du composant coupant le produit de récolte est saisie en tant qu'autre paramètre, sachant que l'évaluation du signal de force de coupe a lieu en prenant en considération la position, sachant que le signal de force de coupe n'est évalué que dans des positions dans lesquelles le produit de récolte est coupé.

15. Procédé selon la revendication 14, ***caractérisé en ce que*** le signal de force de coupe est évalué en tant qu'un signal de force de friction représentant indirectement la force pour entraîner un composant transportant le produit de récolte, dans des positions, dans lesquelles aucun produit de récolte n'est coupé.
